(19) Europäisches Patentamt
European Patent Office
Office européen des brevets

(11) **EP 4 650 820 A1**

(12) **EUROPEAN PATENT APPLICATION**
published in accordance with Art. 153(4) EPC

(43) Date of publication:
**19.11.2025 Bulletin 2025/47**

(21) Application number: **23916664.8**

(22) Date of filing: **16.01.2023**

(51) International Patent Classification (IPC):
***G01S 7/481*** (2006.01)

(52) Cooperative Patent Classification (CPC):
**G01S 7/481**

(86) International application number:
**PCT/CN2023/072459**

(87) International publication number:
**WO 2024/152173 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.**
**Shenzhen, Guangdong 518110 (CN)**

(72) Inventors:
• **SUN, Yuanmeng**
**Shenzhen, Guangdong 518129 (CN)**
• **SHI, Xianling**
**Shenzhen, Guangdong 518129 (CN)**
• **HUANG, Zhizhen**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **SCANNING DEVICE, DETECTION DEVICE, AND VEHICLE**

(57) This application provides a scanning apparatus, a detection apparatus, and a vehicle, and relates to the field of detection technologies. The scanning apparatus (10) includes a driving mechanism (11) and at least two scanning surfaces (12). The driving mechanism (11) is configured to drive the at least two scanning surfaces (12) to move. The at least two scanning surfaces (12) have bending degrees, and the bending degrees of the at least two scanning surfaces (12) are not completely the same. Therefore, the scanning surfaces with not completely the same bending degree are designed, so that when the scanning apparatus is used in a light beam detection apparatus, a light spot density in a field of view is adjusted and controlled, to adjust and control a scanning point cloud pattern, and implement a region of interest feature.

At least two
scanning regions 12

Scanning apparatus 10

Driving
mechanism 11

H2

H1

H3

FIG. 1

**Description**

TECHNICAL FIELD

This application relates to the field of detection technologies, and in particular, to a scanning apparatus, a detection apparatus, and a vehicle.

BACKGROUND

As a weak sensing detection system, a radar technology can detect an object contour with high precision and obtain depth information of an object both in daytime and at night. Compared with conventional technologies such as a millimeter-wave radar and an ultrasonic radar, a lidar (laser radar, Lidar) works at a shorter band, and therefore performance such as a detection resolution and a detection distance can be greatly improved. Therefore, the lidar becomes an indispensable technology in military and civil fields. In artificial intelligence fields such as autonomous driving and robotics, compared with a camera vision solution, the lidar has advantages such as all-weather working, a high measurement resolution, a strong anti-interference capability, and a strong penetration capability, and can independently sense a road environment and assist a vehicle to complete a preset target.

A scanner is a core functional component of the lidar, and is used to implement laser beam steering (beam steering), and cover a space field of view, so that the lidar obtains a large field of view (field of view, FoV). A current scanner includes a scanning mirror and a driving mechanism. The driving mechanism drives the scanning mirror to move in a swinging or rotating manner, to implement beam steering. Because some regions (for example, a central region) of the FoV have higher sensing value, higher point cloud density is required in a high-value region, to implement a region of interest (region of interest, ROI) feature of the lidar.

However, the driving mechanism using the swinging or rotating manner is heavy, and has a limitation on a point cloud pattern (pattern), and cannot agilely change a scanning point cloud pattern, which makes it difficult to implement the ROI feature.

SUMMARY

Embodiments of this application provide a scanning apparatus, a detection apparatus, and a vehicle, to help agilely change a scanning point cloud pattern, so that an ROI feature is implemented.

According to a first aspect, an embodiment of this application provides a scanning apparatus. The scanning apparatus may include a driving mechanism and at least two scanning surfaces. The driving mechanism is configured to drive the at least two scanning surfaces to move. The at least two scanning surfaces have bending degrees, and the bending degrees of the at least two scanning surfaces are not completely the same.

When the scanning apparatus including the scanning surfaces with not completely the same bending degree is used in a detection apparatus that can generate a light beam, different scanning surfaces can change an emergent direction of the light beam under driving of the driving mechanism. In this way, the light beam covers a large field of view, and light spots with different density are generated in different regions of the field of view, which helps implement a region of interest (region of interest, ROI) feature.

With reference to the first aspect, in a possible design, any one of the following implementations may be used for any one of the at least two scanning surfaces: a convex reflector, a concave reflector, a convex lens, or a concave lens.

It should be understood that this is merely an example of an implementation of the scanning surfaces in this embodiment of this application, but is not any limitation. In another embodiment, the scanning surfaces may alternatively use another implementation. Details are not described herein again.

With reference to the first aspect, in a possible design, the at least two scanning surfaces are of an irregular spherical structure, or the at least two scanning surfaces are of an irregular cylindrical structure.

In other words, a geometric shape of a scanning mirror to which the at least two scanning surfaces belong may be designed to change, and any mirror surface with a bending degree may be used, including but not limited to the irregular spherical structure or the irregular cylindrical structure.

With reference to the first aspect, in a possible design, curvatures represent the bending degrees of the at least two scanning surfaces. A curvature of a scanning surface that is of the at least two scanning surfaces and that is located in a central part is the smallest, or a curvature of a scanning surface that is of the at least two scanning surfaces and that is located in a central part is the largest.

According to the scanning apparatus, if a curvature of a scanning surface located in a central part is the smallest, and a curvature of a scanning surface located in a peripheral edge region is large, a central region of a field of view received by the detection apparatus from the scanning apparatus is a high-density region with high-density light spots, and an edge region of the field of view received by the detection apparatus from the scanning apparatus is a low-density region with low-density light spots, so that a point cloud ROI feature of the detection apparatus can be implemented. On the contrary, if a curvature of a scanning surface located in a central part is the largest, and a curvature of a scanning surface located in a peripheral edge region is small, a central region of a field of view received by the detection apparatus from the scanning apparatus is a low-density region with low-density light spots, and an edge region of the field of view received by the detection apparatus from the scanning apparatus is a high-density region with high-density light spots, so that a point cloud ROI feature of the detection apparatus can also be implemented.

It should be noted that in actual application, curvatures of different scanning surfaces may linearly change from a central part to a peripheral edge part, or may non-linearly change. In addition, a structure of the scanning apparatus may be designed based on a specific application scenario of the scanning apparatus. For example, in a scenario in which a central region with high-density light spots and a peripheral edge region with low-density light spots need to be obtained, the foregoing design in which the curvature of the scanning surface located in the central part is the smallest may be used. Alternatively, for example, in a scenario in which a central region with low-density light spots and a peripheral edge region with high-density light spots need to be obtained, the foregoing design in which the curvature of the scanning surface located in the central part is the largest may be used. This is not limited in embodiments of this application.

With reference to the first aspect, in a possible design, that the driving mechanism is configured to drive the at least two scanning surfaces to move includes: The driving mechanism is configured to drive the at least two scanning surfaces to perform a linear motion in at least one direction, where the at least one direction includes a horizontal direction and/or a vertical direction.

The driving mechanism drives the at least two scanning surfaces to perform the linear motion by using the scanning apparatus, which helps conveniently implement the point cloud ROI feature, and can reduce specification requirements for the detection apparatus and the scanning apparatus.

With reference to the first aspect, in a possible design, the scanning apparatus is deployed on an upper surface of a base, the horizontal direction is parallel to the upper surface of the base, and the vertical direction is perpendicular to the upper surface of the base.

It should be noted that this is merely an example description of a product form of the scanning apparatus, but is not any limitation. In actual application, the at least one direction may be changed based on a position relationship between the scanning apparatus and the detection apparatus or a position relationship between the scanning apparatus and the beam. This is not limited in embodiments of this application.

With reference to the first aspect, in a possible design, the linear motion includes a uniform motion or a variable motion. In other words, a linear motion manner of the scanning apparatus may be designed based on a scenario requirement or a service requirement. In a case of the uniform motion, with reference to changes of the bending degrees of the at least two scanning surfaces, density of light spots finally formed in the field of view slightly changes. In a case of the variable motion, with reference to changes of the bending degrees of the at least two scanning surfaces, density of light spots finally formed in the field of view slightly changes.

According to a second aspect, an embodiment of this application provides a detection apparatus. The detection apparatus includes the scanning apparatus according to the first aspect or any one of the possible designs of the first aspect.

With reference to the second aspect, in a possible design, the detection apparatus may further include an emitting apparatus, configured to generate a beam. The scanning apparatus is configured to change an emergent light path of the beam.

With reference to the second aspect, in a possible design, the light beam may include a single-channel light beam, or the light beam may include a multi-channel light beam.

With reference to the second aspect, in a possible design, the light beam has different light spot density in a field of view of the detection apparatus. High-density light spots are obtained through scanning by a scanning surface that is of the scanning apparatus and that has a small curvature. Low-density light spots are obtained through scanning by a scanning surface that is of the scanning apparatus and that has a large curvature.

With reference to the second aspect, in a possible design, the detection apparatus may further include a receiving apparatus, including a detector. The detector is configured to receive an optical signal that is obtained after the light beam is irradiated on an environmental object and that is reflected to a window of the detection apparatus.

According to a third aspect, an embodiment of this application provides a mobile platform, including the detection apparatus according to the second aspect or any one of the possible designs of the second aspect.

According to a fourth aspect, an embodiment of this application provides a vehicle, including the detection apparatus according to the second aspect or any one of the possible designs of the second aspect.

Based on the implementations provided in the foregoing aspects, embodiments of this application may be further combined to provide more implementations.

For technical effects that can be achieved in any one of the possible implementations of the third second and the fourth aspect, refer to descriptions of technical effects that can be achieved in any one of the possible implementations of the first aspect and the second aspect. Repeated details are not described.

BRIEF DESCRIPTION OF DRAWINGS

FIG. 1 is a diagram of a structure of a scanning apparatus according to an embodiment of this application;
FIG. 2 is a diagram of an implementation of scanning surfaces according to an embodiment of this application;

FIG. 3 is a diagram of another implementation of scanning surfaces according to an embodiment of this application;

FIG. 4 is a diagram of a structure of a detection apparatus according to an embodiment of this application;

FIG. 5 is a diagram of a detection principle of an implementation according to an embodiment of this application;

FIG. 6 is a diagram of a detection principle of another implementation according to an embodiment of this application;

FIG. 7 is a diagram of a point cloud pattern according to an embodiment of this application;

FIG. 8 is a diagram of a structure of an example detection apparatus according to an embodiment of this application;

FIG. 9 is a diagram of a structure of another example detection apparatus according to an embodiment of this application;

FIG. 10 is a diagram of a structure of another example detection apparatus according to an embodiment of this application; and

FIG. 11 is a diagram of a structure of a mobile platform according to an embodiment of this application.

## DESCRIPTION OF EMBODIMENTS

To make the objectives, technical solutions, and advantages of this application clearer, the following further describes this application in detail with reference to the accompanying drawings.

Embodiments of this application provide a scanning apparatus, a detection apparatus, and a vehicle. The scanning apparatus including at least two scanning surfaces with bending degrees that are not completely the same may be used in a detection apparatus that can generate a light beam, so that different scanning surfaces can change an emergent direction of the light beam under driving of a driving mechanism. In this way, the light beam covers a large field of view, and light spots with different density are generated in different regions of the field of view, which helps implement a region of interest (region of interest, ROI) feature of the detection apparatus. The scanning apparatus can conveniently implement a point cloud ROI function of the detection apparatus, and can reduce specification requirements for the detection apparatus and the scanning apparatus. In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

The following describes in detail the scanning apparatus and the detection apparatus with reference to the accompanying drawings and embodiments.

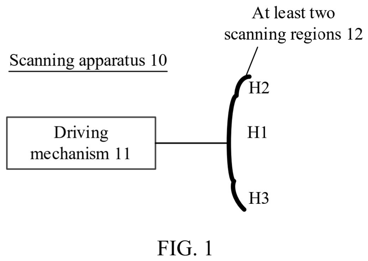

FIG. 1 is a diagram of a structure of the scanning apparatus according to an embodiment of this application.

With reference to FIG. 1, the scanning apparatus 10 may include a driving mechanism 11 and at least two scanning surfaces 12, for example, represented as a scanning surface H1, a scanning surface H2, or a scanning surface H3. The driving mechanism 10 may be configured to drive the at least two scanning surfaces 12 to move. The at least two scanning surfaces 12 have bending degrees. The bending degrees of the at least two scanning surfaces may be completely the same, or the bending degrees of the at least two scanning surfaces may not be completely the same. "Not completely the same" may include partially the same, or may include completely different.

It should be understood that in FIG. 1, only curves of different bending degrees represent different scanning surfaces, and structures, shapes, or other features of the scanning surfaces are not limited. In addition, a connection line between the driving mechanism 11 and the at least two scanning surfaces 12 indicates that the driving mechanism 11 may be connected to the at least two scanning surfaces 12, to drive the at least two scanning surfaces 12 to move. The connection manner is not limited. For example, the driving mechanism 11 may drive the at least two scanning surfaces 12 to perform a linear motion or a non-linear motion in at least one direction. The at least one direction may include a horizontal direction and/or a vertical direction. The following describes the motion manner in detail with reference to the detection apparatus. Details are not described herein.

In actual application, for example, a curvature may represent the bending degree of any one of the at least two scanning surfaces. When designing the at least two scanning surfaces, a person skilled in the art may design curvatures of the at least two scanning surfaces to change, to obtain scanning surfaces with bending degrees that are completely the same or not completely the same. Alternatively, a person skilled in the art may further design a geometric shape of a scanning mirror to which the at least two scanning surfaces belong to change, to obtain scanning surfaces with bending degrees that are completely the same or not completely the same.

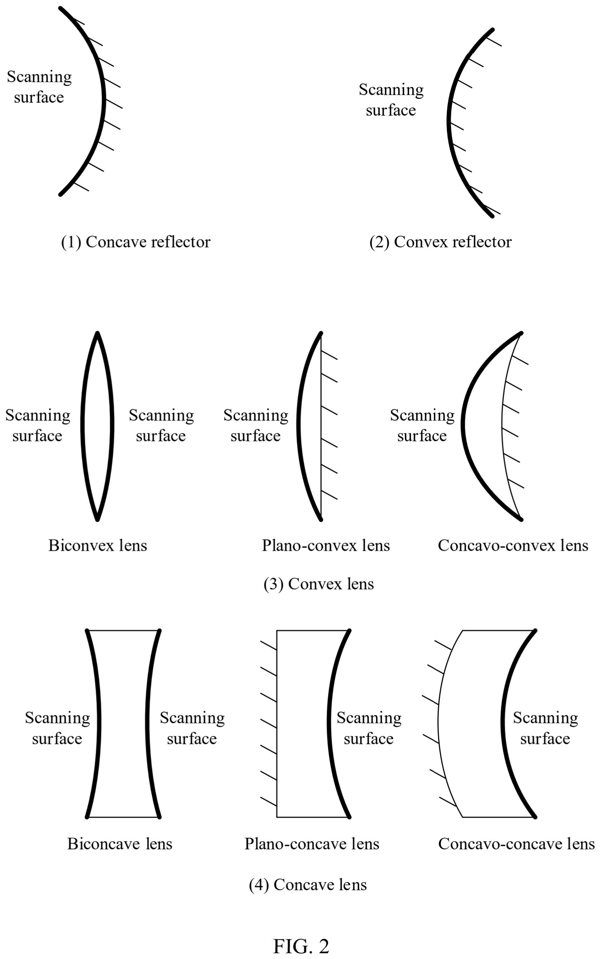

For example, in an optional implementation, when the curvatures of the at least two scanning surfaces are designed to change, as shown in FIG. 2, any one of the following implementations may be used for any one of the at least two scanning surfaces: a convex reflector, a concave reflector, a convex lens (for example, including a biconvex lens, a plano-convex lens, or a concavo-convex lens), or a concave lens (for example, including a biconcave lens, a plano-concave lens, or a concavo-concave lens).

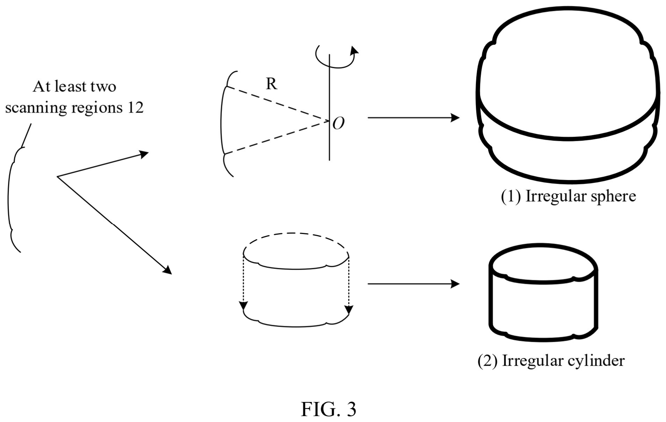

For another example, in another optional implementation, when the geometric shape of the scanning mirror to which the at least two scanning surfaces belong is designed to change, as shown in FIG. 3, the scanning mirror to which the at least two scanning surfaces belong may be of a spherical structure. In this case, the at least two scanning surfaces shown in FIG. 1 may rotate around an axis associated with a circle center (represented by O), to obtain an irregular spherical structure, as shown in (1) in FIG. 3. The at least two scanning surfaces may be a part of a surface of the irregular sphere, and the curvatures of the at least two scanning surfaces may not be completely the same. Alternatively, the scanning mirror to which the at least two scanning surfaces belong may be of a cylindrical structure. In this case, the at least two scanning surfaces shown in FIG. 1 may be extended in a direction (shown by downward dashed arrows in FIG. 3) to obtain an irregular cylinder, as shown in (2) in FIG. 3. The at least two scanning surfaces may be a part of a surface of the irregular cylinder, and the curvatures of the at least two scanning surfaces may not be completely the same.

It should be understood that this is merely an example of an implementation of the bending degrees of the at least two scanning surfaces in this embodiment of this application, but is not any limitation. In actual application, curvatures of different scanning surfaces may linearly change from a central part to a peripheral edge part, or may non-linearly change. Alternatively, materials of the at least two scanning surfaces or the geometric shape of the scanning mirror to which the at least two scanning surfaces belong, and the structure of the scanning apparatus may be designed based on a service requirement or a scenario requirement. This is not limited in embodiments of this application. For example, the at least two scanning surfaces may be designed as follows: A curvature of a scanning surface located in a central part is the smallest. In a scenario in which a central region, with high-density light spots, of a field of view and a peripheral edge region, with low-density light spots, of the field of view need to be obtained, the design in which the curvature of the scanning surface located in the central part of the scanning mirror is the smallest may be used. Alternatively, the at least two scanning surfaces may be designed as follows: A curvature of a scanning surface located in a central part is the largest. In a scenario in which a central region, with low-density light spots, of a field of view and a peripheral edge region, with high-density light spots, of the field of view need to be obtained, the foregoing design in which the curvature of the scanning surface located in the central part of the scanning mirror is the largest may be used. This is not limited in embodiments of this application.

The following uses an example in which the scanning apparatus in this embodiment of this application is used in the detection apparatus to describe a formation principle of light spots, with different density, formed by the scanning apparatus.

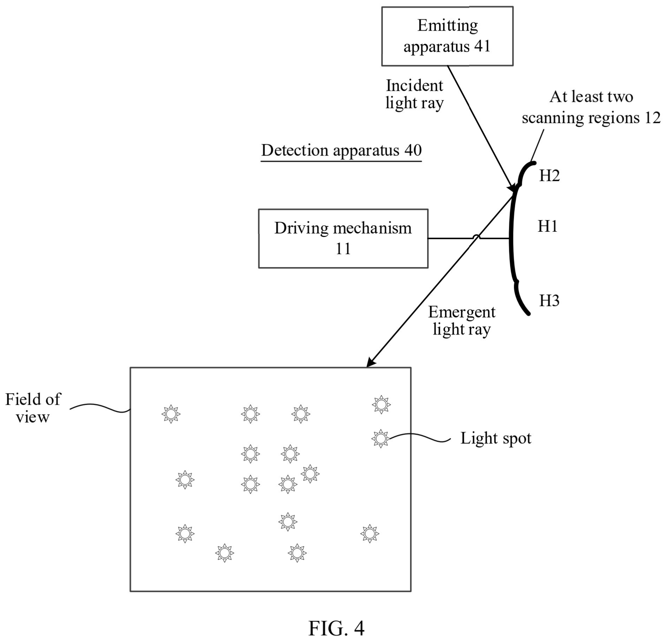

FIG. 4 is a diagram of a structure of the detection apparatus according to an embodiment of this application.

With reference to FIG. 4, the detection apparatus 40 may include a component of the scanning apparatus 10 shown in FIG. 1 and an emitting apparatus 41. The emitting apparatus 41 may be configured to generate a light beam, and the scanning apparatus 10 may be configured to change an emergent light path of the light beam.

Specifically, as an incident light ray of the scanning apparatus 10, the light beam generated by the emitting apparatus 41 may be irradiated on one of the at least two scanning surfaces 12 of the scanning apparatus 10. Because the at least two scanning surfaces 12 perform the linear motion or the non-linear motion in at least one direction under driving of the driving mechanism 11, relative positions of different scanning surfaces of the scanning apparatus and the emitting apparatus change. As a result, an included angle between the incident light ray and a normal line change as the at least two scanning surfaces move, so that a steering (beam steering) angle of an emergent light ray is changed. This makes distribution of the emergent light ray at different moments in a same field of view be different, so that light spots with different density are formed in different regions of the field of view.

The following describes a light spot formation principle in this embodiment of this application.

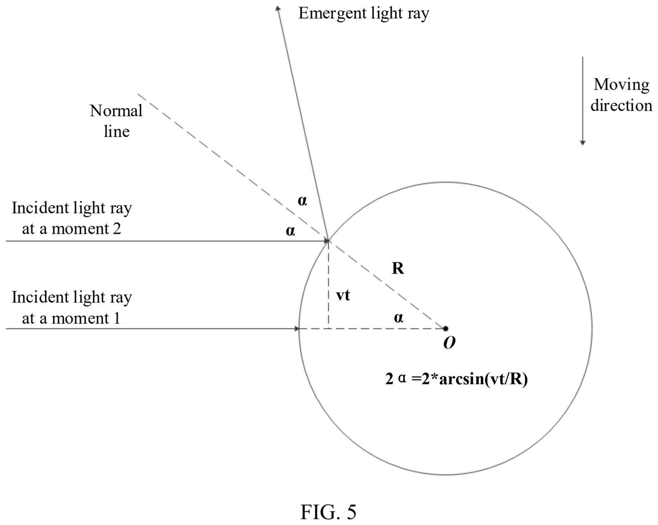

An example in which any scanning surface of the scanning apparatus uses the convex reflector is used. As shown in a top view in FIG. 5, a circle in FIG. 5 represents the convex reflector, and a moving direction shown in FIG. 5 represents a horizontal direction. When light beams at different moments (represented as a moment 1 and a moment 2) from the emitting apparatus 41 are irradiated on a scanning surface of a spherical shape as incident light rays of the scanning apparatus, emergent light paths of the incident light rays may be steered at different positions of the at least two scanning surfaces 12.

If $\alpha$ represents the included angle between the incident light ray and the normal line, an included angle between the emergent light ray and the incident light ray is $2\alpha$, and the following expression (1) is met. In this case, a variation of a light path angle is as follows: $180° - 2\alpha$.

$$2\alpha = 2 * arcsin(vt/R) \qquad (1)$$

t represents a time difference between the moment 1 and the moment 2. v represents a speed at which the driving mechanism drives the at least two scanning surfaces to move in the horizontal direction. vt represents a displacement. R represents a radius, and a curvature is a reciprocal of R.

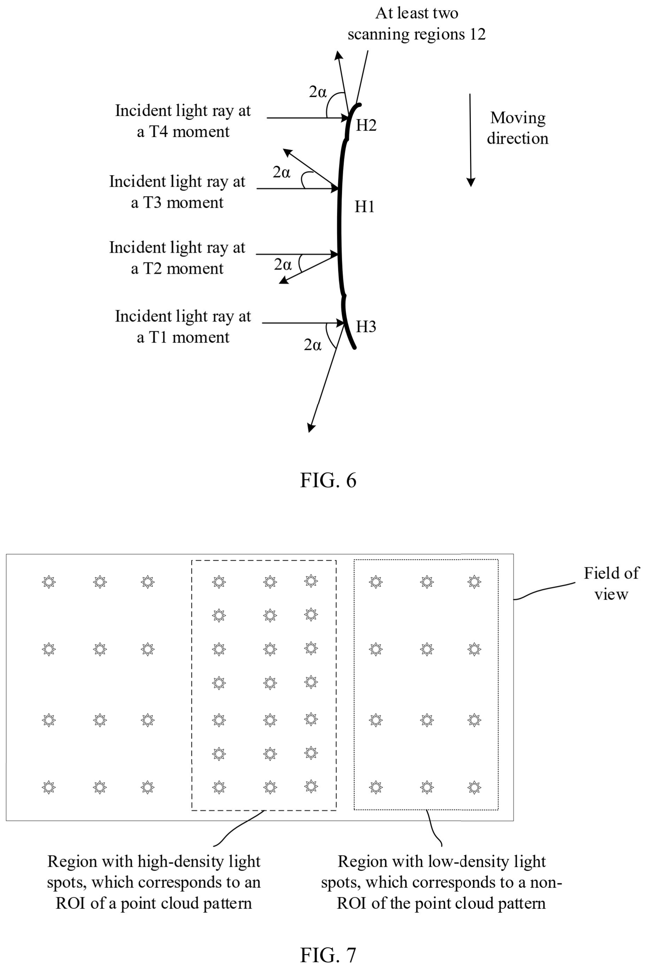

An example in which the at least two scanning surfaces of the scanning apparatus use convex reflectors is used. When the at least two scanning surfaces of the scanning apparatus are designed to have curvatures that are not completely the same, and when the driving mechanism drives the at least two scanning surfaces to move, as shown in the top view in FIG. 6, as the at least two scanning surfaces move, incident light rays emitted by the emitting apparatus at different moments are irradiated to different positions of different scanning surfaces and are reflected at the positions to obtain corresponding emergent light rays. Because curvatures of the scanning surface H1, the scanning surface H2, and the scanning surface H3 are not completely the same, steering angles of emergent light rays at different moments (for example, an incident light ray at a moment T1, an incident light ray at a moment T2, an incident light ray at a moment T3, and an incident light ray at a moment T4) are different from those of the incident light rays corresponding to the emergent light rays. Correspondingly, distribution of the emergent light rays in different regions of a field of view of the detection apparatus is different. In this way, light spots with different density are generated in different regions of the field of view.

An example in which the curvature of the scanning surface H1 located in a central part in FIG. 6 is the smallest is used. As the driving mechanism drives the at least two scanning surfaces of the scanning apparatus to move, a steering angle $2\alpha$ of the incident light ray at the moment T2 or the incident light ray at the moment T3 on the scanning surface H1 is small, and most of the emergent light ray corresponding to the incident light ray at the moment T2 or most of the emergent light ray corresponding to the incident light ray at the moment T3 converges in a central region of the field of view of the detection apparatus. Density of light spots formed in the middle part of the field of view is high. This corresponds to an ROI of a point cloud pattern, which includes high-density point clouds. A steering angle $2\alpha$ of the incident light ray at the moment T1 on the scanning surface H3 is large, a steering angle $2\alpha$ of the incident light ray at the moment T4 on the scanning surface H2 is also large, and most of the emergent light ray corresponding to the incident light ray at the moment T1 or most of the emergent light ray corresponding to the incident light ray at the moment T4 converges in a peripheral edge part of the field of view of the detection apparatus. Density of light spots formed in the edge part is low. This corresponds to a non-ROI of the point cloud pattern, which includes low-density point clouds, as shown in FIG. 7.

It should be understood that the foregoing examples are merely examples for describing the detection apparatus and detection principles in embodiments of this application, but are not any limitation. In actual application, the at least two scanning surfaces of the scanning apparatus move relative to the emitting apparatus. A specific implementation of the relative motion may include that the emitting apparatus is fixed, and the at least two scanning surfaces move, may also include that the at least two scanning surfaces are fixed, and the emitting apparatus moves, or may include that the at least two scanning surfaces and the emitting apparatus jointly move. The specific implementation is not limited in embodiments of this application. In addition, an implementation of the at least two scanning surfaces is not limited to the scanning mirror of the spherical structure, the scanning mirror of the cylindrical structure (for example, the irregular spherical structure or the irregular cylindrical structure shown in FIG. 3), a separate double spherical mirror, or the like that is described in the foregoing examples. In addition, the detection apparatus may further include another structure that is not shown in FIG. 4. For example, the detection apparatus may further include a receiving apparatus. The receiving apparatus may include a detector. The detector is configured to receive an optical signal that is obtained after the light beam is irradiated on an environmental object and that is reflected to a window of the detection apparatus, and obtain a point cloud pattern by processing the received optical signal.

For ease of understanding, the following describes a structure of the detection apparatus in this embodiment of this application by using an example.

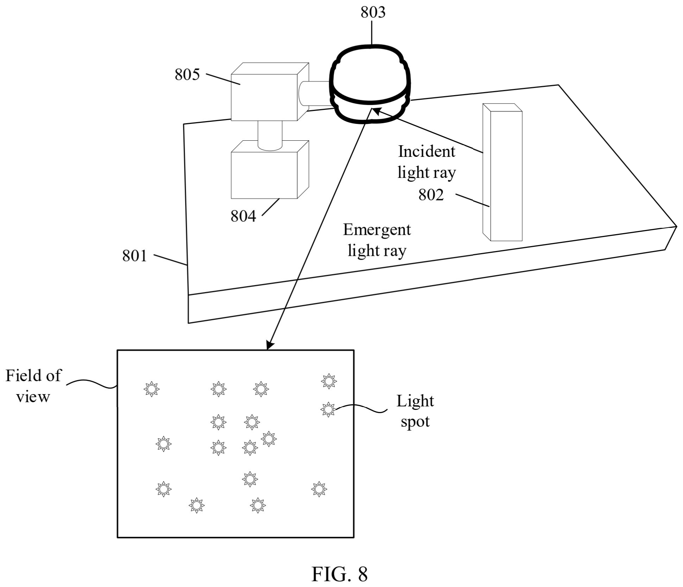

FIG. 8 is a diagram of the structure of the detection apparatus according to an embodiment of this application.

With reference to FIG. 8, the detection apparatus may be a lidar. The detection apparatus may include a base 801, and an emitting apparatus 802 and a scanning apparatus that are located on an upper surface of the base 801. The scanning apparatus may include a scanning mirror 803, a linear motor 804, and a linear motor 805. The scanning mirror 803 is of an irregular spherical structure, and at least two scanning surfaces of the scanning mirror 803 are convex reflectors. The linear motor 804 may drive the scanning mirror 803 to move in a vertical direction, and the vertical direction may be perpendicular to the upper surface of the base 801. The linear motor 805 may drive the scanning mirror 803 to move in a horizontal direction, and the horizontal direction may be parallel to the upper surface of the base 801, and is perpendicular to an irradiation direction of a light beam generated by the emitting apparatus 802.

After the emitting apparatus 802 generates a laser beam, the laser beam is irradiated on a surface of the scanning mirror 803 along an emergent light path. Because the laser beam is reflected on the surface of the scanning mirror 803, and the linear motor 804 and the linear motor 805 drive the scanning mirror 803 to perform a two-dimensional motion in the horizontal direction and the vertical direction, when the light beam is reflected on each scanning surface, an included angle between an emergent light ray and a normal line changes as a reflection position changes, so that the laser beam can cover a field of view of the lidar. In addition, because scanning surfaces of the scanning mirror 803 have bending degrees, density of light spots formed in the field of view of the lidar by emergent light rays obtained after light paths of light rays are changed and steered by the scanning mirror is different, as shown in FIG. 7.

It should be noted that the emitting apparatus 802 in FIG. 8 may use a single channel, to generate a single-channel light beam. Alternatively, the emitting apparatus 802 may use a plurality of vertically arranged channels, to generate a column of multi-channel light beams. An implementation of the emitting apparatus is not limited in embodiments of this application.

In another optional implementation, the scanning mirror 803 shown in FIG. 8 may be replaced with the irregular cylinder shown in FIG. 3, and the emitting apparatus and the driving mechanism are correspondingly redesigned, to obtain a detection apparatus of another design.

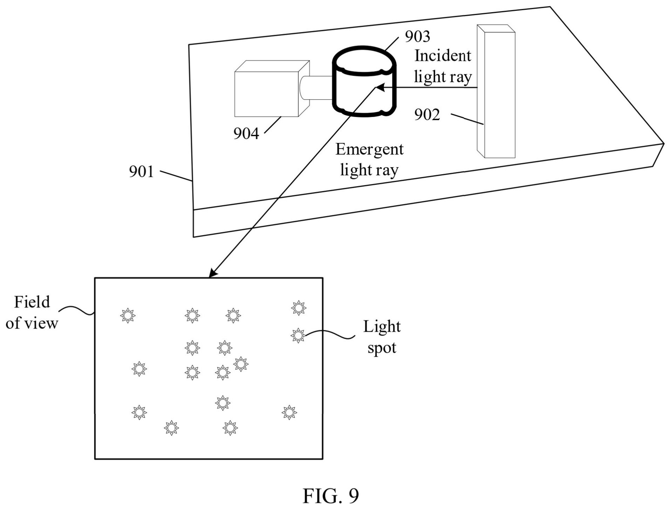

As shown in FIG. 9, the detection apparatus may be a lidar. The detection apparatus may include a base 901, and an emitting apparatus 902 and a scanning apparatus that are located on an upper surface of the base 901. The scanning apparatus may include a scanning mirror 903 and a linear motor 904. The scanning mirror 903 is of an irregular cylindrical structure, and at least two scanning surfaces of the scanning mirror 903 are convex reflectors. A top view of the scanning mirror 903 is shown in FIG. 6. A side that is of the scanning mirror 903 and that faces the emitting apparatus 902 includes at least two scanning surfaces with bending degrees that are not completely the same. The linear motor 904 may drive the scanning mirror 903 to move in a horizontal direction, and the horizontal direction may be parallel to the upper surface of the base 901, and is perpendicular to an irradiation direction of a light beam generated by the emitting apparatus 902. For example, the scanning mirror 903 may include the scanning surface H1, the scanning surface H2, and the scanning surface H3, as shown in FIG. 3. The scanning mirror 903 may be designed as follows: A curvature of the scanning surface H1 is the smallest, and curvatures of the scanning surface H2 and the scanning surface H3 are the same or different.

After the emitting apparatus 902 generates a laser beam, based on the foregoing principle explanation with reference to FIG. 4 to FIG. 7, because the scanning mirror 903 moves in the horizontal direction, laser beams generated at different moments are emitted at different locations of the scanning mirror 903. Because a curvature of a scanning surface located in a central part of the scanning mirror 903 is small, a steering angle of an emergent light ray reflected on the scanning surface in the central part is smaller than a steering angle of an incident light ray. Almost all light rays emitted on the scanning surface converge in a middle part of a field of view. Therefore, density of light spots distributed in the middle part of the field of view is high. Curvatures of scanning surfaces located on two sides of the scanning mirror 903 are large, and steering angles of emergent light rays reflected on the scanning surfaces are greater than steering angles of incident light rays. As a result, some light rays emitted on the scanning surfaces cannot converge in the field of view, but converge outside the field of view. Therefore, density of light spots distributed near an edge part around the field of view is low.

In another optional implementation, the scanning mirror 803 shown in FIG. 8 may be replaced with a curved mirror (or referred to as a two-dimensional variable-curvature curved mirror) that has a bending degree in both a horizontal direction and a vertical direction, and the emitting apparatus and the driving mechanism are correspondingly redesigned, to obtain a detection apparatus of another design.

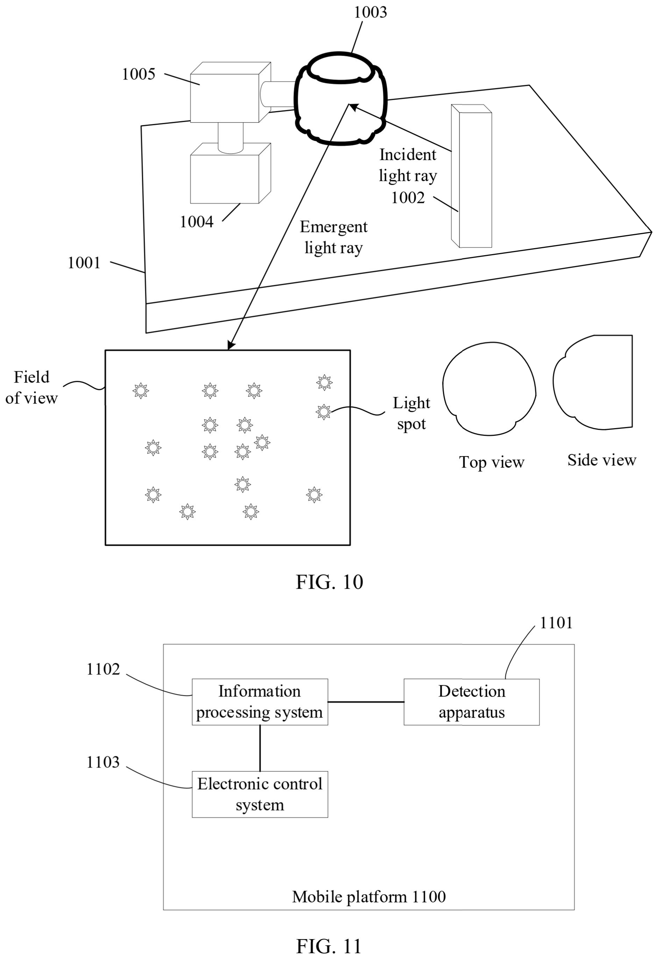

With reference to FIG. 10, the detection apparatus may be a lidar. The detection apparatus may include a base 1001, and an emitting apparatus 1002 and a scanning apparatus that are located on an upper surface of the base 1001. The scanning apparatus may include a scanning mirror 1003, a linear motor 1004, and a linear motor 1005. The scanning mirror 1003 is similar to the scanning mirror 902 shown in FIG. 9. A difference lies in that a side that is of a surface of the scanning mirror 1003 and that faces the emitting apparatus includes scanning surfaces with different curvatures in both a horizontal direction and a vertical direction, and each scanning surface is a convex reflector. The linear motor 1004 may drive the scanning mirror 1003 to move in a vertical direction, and the vertical direction may be perpendicular to an upper surface of the base 1001. The linear motor 1005 may drive the scanning mirror 1003 to move in a horizontal direction, and the horizontal direction may be parallel to the upper surface of the base 1001, and is perpendicular to an irradiation direction of a light beam generated by the emitting apparatus 1002. A top view and a side view of the scanning mirror 1003 are shown in FIG. 10.

The linear motor 1005 may drive the scanning mirror 1003 to perform a periodic linear motion in the horizontal direction, to form an FoV in the horizontal direction. The linear motor 1004 may drive the scanning mirror 1003 to perform a periodic linear motion in the vertical direction, to form an FoV in the vertical direction. After a laser beam generated by the emitting apparatus 1002 is irradiated on the scanning mirror 1003, the laser beam is reflected on the surface of the scanning mirror 1003. If the scanning mirror 1003 is designed in a manner in which a curvature of a scanning surface located in a central part is the smallest, after the laser beam is emitted on the scanning surface that is located in the central part of the scanning mirror 1003 and that has a small curvature, a steering angle of an emergent light ray is smaller than a steering angle of an incident light ray. In this way, most light rays converge in a middle part of a field of view of the detection apparatus. Therefore, density of light spots formed in the middle part is high. This corresponds to an ROI of a point cloud pattern. After the laser beam is reflected on a scanning surface that is located in a peripheral part of the scanning mirror 1003 and that has a large curvature, a steering angle of an emergent light ray is greater than a steering angle of an incident light ray. In this way, most light rays are dispersedly distributed in a peripheral region of the field of view of the detection apparatus. Therefore, density of light spots formed in the peripheral region of the field of view is low.

In this way, according to the detection apparatus shown in FIG. 8 to FIG. 10, when the scanning apparatus in this embodiment of this application is designed based on a requirement, and the scanning apparatus is used in the detection apparatus, the driving mechanism drives at least two regions that are of the scanning apparatus and that have not completely the same bending degree to move. In this way, an emergent light path of a light beam emitted by the emitting apparatus of the detection apparatus is steered, and light spots with different density are formed in the field of view of the detection apparatus, which conveniently implements an ROI feature of the detection apparatus, and reduces specification requirements for the detection apparatus and the scanning apparatus.

It should be noted that in this embodiment of this application, the linear motor shown in FIG. 8 to FIG. 10 is merely one of implementations of the driving mechanism, but is not limited. In actual application, the linear motor may be replaced, based on a requirement, with any other device that can implement a driving function. This is not limited in embodiments of this application. In addition, when the driving mechanism drives the at least two scanning surfaces to perform a linear motion, the motion may be a uniform motion or a variable motion. The motion manner is not limited in embodiments of this application.

It should be noted that in this embodiment of this application, curvatures of the at least two scanning surfaces may also be completely the same. For example, a scanning mirror of the scanning apparatus may be designed to be of a regular spherical structure, and a surface of the sphere includes the at least two scanning surfaces. When the scanning mirror is used in the detection apparatus to steer the emergent light path of the laser beam from the emitting apparatus, motion of the driving mechanism may be correspondingly controlled, so that after the laser beam is steered on the surface of the moving sphere, light spots with different density are formed in the field of view of the detection apparatus. For example, in this case, the control on the driving mechanism may include: The driving mechanism is controlled to drive the spherical scanning mirror to move at a low speed to a position close to the light beam from the emitting apparatus, and the driving mechanism is controlled to drive the spherical scanning mirror to move at a high speed to a position away from the light beam from the emitting apparatus. In this way, light beams form high-density light spots in the middle part of the field of view of the detection apparatus, and form low-density light spots in the edge part of the field of view of the detection apparatus. Alternatively, the driving mechanism is controlled to drive the spherical scanning mirror to move at a high speed to a position close to the light beam from the emitting apparatus, and the driving mechanism is controlled to drive the spherical scanning mirror to move at a low speed to a position away from the light beam from the emitting apparatus. In this way, light beams form low-density light spots in the middle part of the field of view of the detection apparatus, and form high-density light spots in the edge part of the field of view of the detection apparatus. For a detailed implementation principle, refer to related descriptions with reference to FIG. 4 to FIG. 7 in the entire specification. Details are not described herein again.

FIG. 11 is a diagram of a structure of a mobile platform according to an embodiment of this application. With reference to FIG. 11, the mobile platform 1100 may include a detection apparatus 1101. For specific implementation of the detection apparatus 1101, refer to the foregoing related descriptions. Details are not described herein again.

In a possible implementation, the mobile platform 1100 may further include an information processing system 1102. The information processing system 1102 may be configured to determine feature information of an irradiated object based on a reflected light beam received by a receiving apparatus of the detection apparatus 1101 and an emitting light beam generated by an emitting apparatus of the detection apparatus 1101. The feature information includes but is not limited to information such as a target distance, an orientation, a height, a speed, a posture, even a shape, and the like.

In another optional implementation, the mobile platform 1100 may further include an electronic control system 1103 coupled to the information processing system 1102. The electronic control system 1103 may include a communication interface, and communicate with the information processing system 1102 through the communication interface. The electronic control system 1103 may control a motion status of the mobile platform 1100 based on the feature information of the illuminated object from the information processing system 1102.

An example in which the mobile platform 1100 is a self-driving vehicle is used. The self-driving vehicle includes the detection apparatus 1101, the information processing system 1102, and the electronic control system 1103. The electronic control system 1103 may be an (electronic control unit, ECU), that is, a vehicle-mounted computer. When the detection apparatus 1101 identifies that an obstacle exists ahead, and the information processing system 1102 calculates feature information of the obstacle, the electronic control system 1103 may control, based on the feature information of the obstacle and navigation information (such as a map), a drive apparatus of the self-driving vehicle to decelerate, stop, or turn around and take a detour; or when the detection apparatus 1101 and the information processing system 1102 determine that no obstacle exists, the electronic control system 1103 may control, based on information indicating that no obstacle exists, a drive apparatus of the self-driving vehicle to travel at a constant speed or travel at an accelerated speed.

In an optional embodiment, a specific type of the mobile platform 1100 is not limited. For example, the mobile platform 1100 may be a mobile platform such as a vehicle, a ship, an airplane, a train, a spacecraft, or an uncrewed aerial vehicle, which is applicable to the technical solutions of this application.

In addition, the mobile platform 1100 may further include a global positioning system (global positioning system, GPS) apparatus and an inertial measurement unit (inertial measurement unit, IMU) apparatus. The detection apparatus 1101 and the information processing system 1102 may obtain feature information such as a position and a speed of an irradiated object based on measurement data of the GPS apparatus and the IMU apparatus.

**Claims**

1. A scanning apparatus, wherein the scanning apparatus comprises a driving mechanism and at least two scanning surfaces;

    the driving mechanism is configured to drive the at least two scanning surfaces to move; and
    the at least two scanning surfaces have bending degrees, and the bending degrees of the at least two scanning surfaces are not completely the same.

2. The scanning apparatus according to claim 1, wherein any one of the following implementations may be used for any one of the at least two scanning surfaces: a convex reflector, a concave reflector, a convex lens, or a concave lens.

3. The scanning apparatus according to claim 2, wherein the at least two scanning surfaces are of an irregular spherical structure, or the at least two scanning surfaces are of an irregular cylindrical structure.

4. The scanning apparatus according to any one of claims 1 to 3, wherein curvatures represent the bending degrees of the at least two scanning surfaces, and a curvature of a scanning surface that is of the at least two scanning surfaces and that is located in a central part is the smallest, or a curvature of a scanning surface that is of the at least two scanning surfaces and that is located in a central part is the largest.

5. The scanning apparatus according to any one of claims 1 to 4, wherein that the driving mechanism is configured to drive the at least two scanning surfaces to move comprises: the driving mechanism is configured to drive the at least two scanning surfaces to perform a linear motion in at least one direction, wherein the at least one direction comprises a horizontal direction and/or a vertical direction.

6. The scanning apparatus according to claim 5, wherein the scanning apparatus is deployed on an upper surface of a base, the horizontal direction is parallel to the upper surface of the base, and the vertical direction is perpendicular to the upper surface of the base.

7. The scanning apparatus according to claim 5 or 6, wherein the linear motion comprises a uniform motion or a variable motion.

8. A detection apparatus, wherein the detection apparatus comprises the scanning apparatus according to any one of claims 1 to 7.

9. The detection apparatus according to claim 8, further comprising:
    an emitting apparatus, configured to generate a light beam, wherein the scanning apparatus is configured to change an emergent light path of the light beam.

10. The detection apparatus according to claim 9, wherein the light beam comprises a single-channel light beam, or the light beam comprises a multi-channel light beam.

11. The detection apparatus according to claim 9 or 10, wherein the light beam has different light spot density in a field of view of the detection apparatus, high-density light spots are obtained through scanning by a scanning surface that is of the scanning apparatus and that has a small curvature, and low-density light spots are obtained through scanning by a scanning surface that is of the scanning apparatus and that has a large curvature.

12. The detection apparatus according to any one of claims 8 to 10, further comprising:
    a receiving apparatus, comprising a detector, wherein the detector is configured to receive an optical signal that is obtained after the light beam is irradiated on an environmental object and that is reflected to a window of the detection apparatus.

13. A mobile platform, comprising the detection apparatus according to any one of claims 8 to 12.

14. A vehicle, comprising the detection apparatus according to any one of claims 8 to 12.

At least two
scanning regions 12

Scanning apparatus 10

Driving
mechanism 11

H2

H1

H3

FIG. 1

Scanning
surface

(1) Concave reflector

Scanning
surface

(2) Convex reflector

Scanning
surface

Scanning
surface

Scanning
surface

Scanning
surface

Biconvex lens

Plano-convex lens

Concavo-convex lens

(3) Convex lens

Scanning
surface

Scanning
surface

Scanning
surface

Scanning
surface

Biconcave lens

Plano-concave lens

Concavo-concave lens

(4) Concave lens

FIG. 2

At least two scanning regions 12

R

O

(1) Irregular sphere

(2) Irregular cylinder

FIG. 3

Emitting
apparatus 41

Incident
light ray

At least two
scanning regions 12

Detection apparatus 40

H2

Driving mechanism
11

H1

H3

Emergent
light ray

Field of
view

Light spot

FIG. 4

FIG. 5

At least two
scanning regions 12

2α

Incident light ray at
a T4 moment

H2

Moving
direction

2α

Incident light ray at
a T3 moment

H1

Incident light ray at
a T2 moment

2α

Incident light ray at
a T1 moment

H3

2α

FIG. 6

Field of
view

Region with high-density light
spots, which corresponds to an
ROI of a point cloud pattern

Region with low-density light
spots, which corresponds to a non-
ROI of the point cloud pattern

FIG. 7

803

805

Incident
light ray

802

804

Emergent
light ray

801

Field of
view

Light
spot

FIG. 8

903
Incident
light ray

904

902

901

Emergent
light ray

Field
of view

Light
spot

FIG. 9

1003

1005

1004

Incident
light ray
1002

Emergent
light ray

1001

Field
of view

Light
spot

Top view       Side view

FIG. 10

1101

1102

Information
processing system

Detection
apparatus

1103

Electronic control
system

Mobile platform 1100

FIG. 11

## INTERNATIONAL SEARCH REPORT

| | International application No. |
|---|---|
| | **PCT/CN2023/072459** |

### A. CLASSIFICATION OF SUBJECT MATTER

G01S 7/481(2006.01)i

According to International Patent Classification (IPC) or to both national classification and IPC

### B. FIELDS SEARCHED

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNTXT, CNABS, CNKI, ENTXT: 扫描, 反射, 激光, 雷达, 弯曲度, 曲面, 曲率, laser, radar, scanner, rotating, reflection, curvature, curved, reflector, emitter, POI

### C. DOCUMENTS CONSIDERED TO BE RELEVANT

| Category* | Citation of document, with indication, where appropriate, of the relevant passages | Relevant to claim No. |
|---|---|---|
| X | CN 207164240 U (XIAMEN CITY YAPHA OPTOELECTRONICS TECHNOLOGY CO., LTD.) 30 March 2018 (2018-03-30)<br>description, paragraphs [0021]-[0038], and figures 1-3 | 1-14 |
| X | CN 109815756 A (SICK AG.) 28 May 2019 (2019-05-28)<br>description, paragraphs [0038]-[0062], and figures 1-9 | 1-14 |
| X | CN 109863423 A (VALEO SCHALTER UND SENSOREN GMBH) 07 June 2019 (2019-06-07)<br>description, paragraphs [0040]-[0050], and figures 1-9 | 1-14 |
| X | CN 213182004 U (WUHAN KYLE OPTICS TECHNOLOGY CO., LTD.) 11 May 2021 (2021-05-11)<br>description, paragraphs [0035]-[0062], and figures 1-8 | 1-14 |
| A | US 10345447 B1 (LUMINAR TECHNOLOGIES, INC.) 09 July 2019 (2019-07-09)<br>entire document | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 September 2023** | **25 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072459**

| Patent document cited in search report | | | Publication date (day/month/year) | Patent family member(s) | | | Publication date (day/month/year) |
|---|---|---|---|---|---|---|---|
| CN | 207164240 | U | 30 March 2018 | None | | | |
| CN | 109815756 | A | 28 May 2019 | JP | 2019124924 | A | 25 July 2019 |
| | | | | KR | 20190058331 | A | 29 May 2019 |
| | | | | US | 2019154807 | A1 | 23 May 2019 |
| | | | | US | 11353560 | B2 | 07 June 2022 |
| | | | | DE | 102017127420 | A1 | 23 May 2019 |
| | | | | EP | 3486833 | A1 | 22 May 2019 |
| | | | | EP | 3486833 | B1 | 22 April 2020 |
| | | | | JP | 2019124924 | A | 25 July 2019 |
| | | | | KR | 20190058331 | A | 29 May 2019 |
| | | | | US | 2019154807 | A1 | 23 May 2019 |
| | | | | US | 11353560 | B2 | 07 June 2022 |
| | | | | DE | 102017127420 | A1 | 23 May 2019 |
| | | | | EP | 3486833 | A1 | 22 May 2019 |
| | | | | EP | 3486833 | B1 | 22 April 2020 |
| CN | 109863423 | A | 07 June 2019 | US | 2019265338 | A1 | 29 August 2019 |
| | | | | US | 11579255 | B2 | 14 February 2023 |
| | | | | WO | 2018054871 | A1 | 29 March 2018 |
| | | | | DE | 102016117852 | A1 | 22 March 2018 |
| | | | | EP | 3516420 | A1 | 31 July 2019 |
| | | | | EP | 3516420 | B1 | 31 August 2022 |
| | | | | US | 2019265338 | A1 | 29 August 2019 |
| | | | | US | 11579255 | B2 | 14 February 2023 |
| | | | | WO | 2018054871 | A1 | 29 March 2018 |
| | | | | DE | 102016117852 | A1 | 22 March 2018 |
| | | | | EP | 3516420 | A1 | 31 July 2019 |
| | | | | EP | 3516420 | B1 | 31 August 2022 |
| CN | 213182004 | U | 11 May 2021 | None | | | |
| US | 10345447 | B1 | 09 July 2019 | None | | | |

Form PCT/ISA/210 (patent family annex) (July 2022)